# EUROPÄISCHE PATENTSCHRIFT

(11) **EP 2 403 928 B1**
(45) Veröffentlichungstag und Bekanntmachung des Hinweises auf die Patenterteilung: **29.03.2017**
(21) Anmeldenummer: 10708913.8
(22) Anmeldetag: 26.02.2010
(51) Int. Cl.: C10J 3/50, C10J 3/72, C10J 3/84, C10K 1/04, C10K 1/10, C10J 3/48

(54) **VERFAHREN UND VORRICHTUNG ZUR NUTZUNG DER ENTHALPIE EINES SYNTHESEGASES DURCH ZUSATZ- UND NACHVERGASUNG VON NACHWACHSENDEN BRENNSTOFFEN**
PROCESS AND APPARATUS FOR UTILIZING THE ENTHALPY OF A SYNTHESIS GAS BY MEANS OF ADDITIONAL AND POST-GASSING OF RENEWABLE FUELS
PROCÉDÉ ET DISPOSITIF POUR L'UTILISATION DE L'ENTHALPIE D'UN GAZ DE SYNTHÈSE PAR GAZÉIFICATION SUPPLÉMENTAIRE ET POSTÉRIEURE DE COMBUSTIBLES RENOUVELABLES

(30) Priorität: 04.03.2009 DE 102009011174; 17.02.2010 DE 102010008384
(43) Veröffentlichungstag der Anmeldung: 11.01.2012
(73) Patentinhaber: ThyssenKrupp Industrial Solutions AG, 45143 Essen (DE)
(72) Erfinder: ULLRICH, Norbert, 45139 Essen (DE)
(74) Vertreter: Kilchert, Jochen
(86) Internationale Anmeldenummer: PCT/EP2010/001180
(87) Internationale Veröffentlichungsnummer: WO 2010/099896

(56) Entgegenhaltungen:
- EP-A1- 1 918 352
- EP-A2- 1 749 872
- WO-A1-2009/020809
- GB-A- 675 918
- US-A- 4 647 294
- Choren Industries: "Beta plant experience and lessons so far", , 15. Oktober 2008 (2008-10-15), XP008131226, Gefunden im Internet: URL:http://www.fnr-server.de/cms35/fileadm in/allgemein/pdf/veranstaltungen/BtL_Berli n_2008/4_Blades.pdf [gefunden am 2011-01-10]
- Xu Shisen, Thermal Power Research Institute (TPRI): "Two-stage Dry-fed Entrained Flow Coal Gasifier", China , Nr. 008131225 16. Oktober 2007 (2007-10-16), XP008131225, Gefunden im Internet: URL:http://www.egcfe.ewg.apec.org/publicat ions/proceedings/CFE/Xian_2007/8-2_Shisen. pdf [gefunden am 2011-01-10]

## Beschreibung

Die Erfindung betrifft ein Verfahren zur Vergasung nach Ansruch 1 von festen, feingemahlenen kohlenstoffhaltigen Brennstoffen mit sauerstoffhaltigen Gasen in einem Flugstromverfahren unter erhöhtem Druck bei einer Temperatur oberhalb des Schlackeschmelzpunktes, durch das ein Synthesegas erzeugt wird und an den Reaktorwänden des Vergasungsreaktors flüssige Schlacke abgeschieden wird, wobei die Abkühlung der hohen Temperaturen des Synthesegases nicht ausschließlich durch Zugabe von einem gekühlten gasförmigen, dampfförmigen oder flüssigen Fremdmedium oder durch Eindüsung von Wasser nach der Erzeugung des Synthesegases erfolgt, sondern durch Zusatz- oder Nachvergasung von biologischen oder nachwachsenden Brennstoffen in den Synthesegasstrom während der Erzeugung. Die Zugabe der nachwachsenden Brennstoffe erfolgt in Ausführungsrichtung des Synthesegases tangential in mindestens einer nachgeschalteten Brennerebene des Abkühlraumes, wodurch die Enthalpie des heißen Synthesegases zum Teil zur Vergasung eines nachwachsenden Brennstoffes genutzt werden kann. Die Erfindung betrifft auch eine Vorrichtung zur endothermen Vergasung von festen, nachwachsenden Brennstoffen in einer weiteren Brennerebene innerhalb des Abkühlraumes eines gekühlten Reaktors, der sich in einem Druckbehälter befindet.

Eine Möglichkeit zur Herstellung von Synthesegas ist die Vergasung von festen, kohlenstoffhaltigen Brennstoffen mit Sauerstoff oder mit sauerstoffangereicherter Luft. Durch die Reaktion des Brennstoffes mit dem Gas, der in der Regel in feingemahlenem Zustand in den Reaktionsraum zugeführt wird, entsteht ein Synthesegas, das zu einem wesentlichen Bestandteil aus Kohlenmonoxid und Wasserstoff besteht. Gibt man dem sauerstoffhaltigen Gas Wasserdampf hinzu, so erhält man ein Synthesegas, das auch Wasserstoff enthält. Die Brennstoffe werden typischerweise zur Reaktion in einem Flugstromverfahren in dem Reaktionsraum umgesetzt, wobei Sauerstoff oder ein sauerstoffangereichertes Gas unter Druck mit dem feingemahlenen Brennstoff gemischt und über einen oder mehrere Brenner in einer Staubflamme in den Reaktionsraum eingedüst werden. Das so erhaltene Synthesegas besitzt in einer typischen Ausführungsform des Verfahrens eine Temperatur von 1200 - 1600 °C.

Um die hohe Temperatur des Synthesegases schnell und wirksam abzuführen und um Anbackungen in nachgeschalteten Prozessanlagen zu vermeiden, wird das Synthesegas nach dem Erhalt einem sogenannten "Quenchprozess" zugeführt. Dabei wird das Synthesegas mit einem kühleren gasförmigen, dampfförmigen oder flüssigen Medium gemischt oder durch Eindüsung von Wasser abgekühlt, so dass dieses seine hohe innere Enthalpie nach der Erzeugung schnell und effizient abführen kann. Als Brennstoffe werden beispielhaft Kohle, Koks, Biomasse oder Petrolkoks eingesetzt. Die Brennstoffe werden vor der Vergasungsreaktion typischerweise durch einen Mahlvorgang in eine feinverteilte Form überführt. Eine typische Korngröße der Brennstoffe vor der Vergasungsreaktion beträgt 0,05 bis 0,5 mm. Um eine optimale Wirksamkeit der Flugstromvergasung zu erreichen, kann der Brennstoff mit einem Drall in die Flugstromflamme eingeblasen werden, was durch tangential vorgesehene Einblasungsdüsen und -brenner in die Flugstromwolke geschieht.

Bei der Durchführung des Quenchprozesses wird eine große Menge an gasförmigem, dampfförmigem oder flüssigem Kühlungsmittel oder Wasser zugeführt, welches oftmals nur zum Teil in den Vergasungsprozess zurückgeführt werden kann. Zudem geht ein großer Teil der Wärmeenthalpie des Synthesegases verloren, da das Kühlmittel oftmals durch Auskondensieren und Wiederverdampfung in den Prozess zurückgeführt werden muss. Dies ist energieaufwendig und bedeutet einen großen apparativen Aufwand. Günstig wäre es, einen Prozess zur Verfügung zu stellen, der die hohe innere Energie des erhaltenen Synthesegases durch einen Folgeprozess nutzt. Es besteht deshalb die Aufgabe, ein Verfahren zur Verfügung zu stellen, das die Wärmeenthalpie des heißen Synthesegases noch in der Flugstromvergasung für einen Folgeprozess nutzt.

Die Erfindung löst diese Aufgabe durch ein Verfahren, welches durch mindestens eine weitere Brennerebene, die hinter der ersten Brennerebene angeordnet ist, und die sich über einen in Gasströmungsrichtung hinteren Teilbereich der gesamten Höhe des Reaktors erstreckt, einen nachwachsenden Rohstoff als Brennstoff tangential in den Abkühlraum zuführt, wodurch eine weitere Vergasungsreaktion des nachwachsenden Rohstoffes in dem Abkühlraum erfolgt. Diese Reaktion ist endotherm, wodurch ein großer Teil der in dem Synthesegas enthaltenen Enthalpie für die weitere Reaktion chemisch genutzt wird. Die Vergasung von nachwachsenden Brennstoffen liefert ein aschearmes Synthesegas, da pflanzliche Rohstoffe einen erheblich geringeren Anteil an aschebildenden Verbrennungsstoffen enthalten. Auf diese Weise besitzt das so erhaltene Synthesegas einen erheblich geringeren Feststoffgehalt. Durch die nachgeschaltete Vergasung der nachwachsenden Rohstoffe kann die Temperatur des Synthesegases insbesondere im Abkühlraum zum Herunterkühlen des Gases energetisch genutzt und gesteuert werden, was zu einer Energieeinsparung des Prozesses führt. Die Brenner können dabei als solche oder als Brennerlanzen ausgeführt werden.

Im Stand der Technik sind Verfahren zur Vergasung von biologischen oder nachwachsenden Brennstoffen im Gemisch mit kohlenstoffhaltigen Brennstoffen bekannt. Die EP 1027407 B1 beschreibt ein Verfahren zur Erzeugung von Brenngas, Synthesegas und Reduktionsgas aus nachwachsenden und fossilen Brennstoffen durch Verbrennen in einem Brenner mit gasförmigem Sauerstoff oder sauerstoffhaltigen Gasen. Der Brennstoff wird beim Eintritt in die Reaktionskammer in Rotation versetzt, um die mineralischen Bestandteile, die bei der Reaktionstemperatur flüssig vorliegen, aus der Vergasungsreaktion an die Reaktorwand zu befördern und diese dadurch abzutrennen. Das Vergasungsmittel wird durch eine zentrale Öffnung im Boden der Brennkammer in den Vergasungsreaktor geleitet und bildet einen Tauchstrahl. Dem Vergaser wird ebenfalls ein kohlenstoffhaltiger Brennstoff zugeführt, wobei die Zugabeposition des kohlenstoffhaltigen Brennstoffes nicht näher beschrieben wird.

Die Internetpublikation von Choren Industries "Beta Plant - experience and lessons learnt so far...", vorgetragen auf dem BTL Kongress am 15.10.2008 in Berlin, beschreibt einen Vergasungsreaktor und ein Verfahren zur Vergasung von kohlenstoffhaltigem Material, wobei der Vergaser mit zwei verschiedenen Reaktionszonen ausgestattet ist, von denen der erste mit einem teerreichen Gas und einem sauerstoffhaltigen Gas betrieben wird, so dass sich bereits in der ersten Reaktionszone ein Produktgas ergibt, welches wenigstens zu einem Teil in einen zweiten Reaktionsraum geführt wird, wo ein zweiter Brennstoff durch weitere Brenner eingedüst wird, welcher in dieser zweiten Reaktionszone angeordnet sind, wobei der zweite Brennstoff ein nachwachsender Brennstoff sein kann.

US 4,647,294 beschreibt einen Reaktor zur partiellen Oxidation von hochgradig asche- oder metallhaltigen flüssigen kohlenwasserstoffhaltigen Brennstoffen, wobei aus der Suspension eines festen kohlenstoffhaltigen Brennstoffes durch Vergasung ein Synthesegas, ein reduzierendes Gas, oder ein Brennstoffgas erhalten wird, welches durch Vergasung in zwei aufeinanderfolgenden Reaktionszonen erhalten wird, und wobei der Produktgasstrom aus der ersten Reaktionszone aufgeteilt wird, und der erste Produktgasstrom in einem Rippenkühler oder einem Konvektionskühler gekühlt wird, und der zweite Produktgasstrom in eine zweite Reaktionszone eintritt, in welche eine pumpbare Suspension eingespeist wird, welche die ausgeschleusten asche- und metallhaltigen Rückstände nach dem Kühlen enthält. Die aus der zweiten Reaktionszone austretenden Produktgase werden in einer Kühlzone durch Einleiten in eine Kühlzone mit einer Kühlflüssigkeit abgeschreckt und heruntergekühlt.

Für die Ausführung der vorliegenden Erfindung ist es hingegen erforderlich, den Brennstoff in zwei Ebenen in den Reaktor zu führen. Nur dadurch kann die Enthalpie der Vergasung des kohlenstoffhaltigen Brennstoffes zur endothermen Zusatzvergasung von biologischen Brennstoffen genutzt werden. Da mit der Zusatzvergasung von nachwachsenden Brennstoffen eine Herunterführung der Synthesegastemperatur erreicht werden kann, lässt sich das Verfahren auch als "chemical quench" bezeichnen. Durch die tangentiale Einleitung in den Abkühlraum wird die Effizienz der Vergasungsreaktion erhöht.

Beansprucht wird insbesondere ein Verfahren zur Herstellung von Synthesegas durch die Vergasung von festen, feingemahlenen, kohlenstoffhaltigen Brennstoffen mit Sauerstoff oder einem sauerstoffangereicherten Gas in einem Flugstromverfahren unter erhöhtem Druck bei Temperaturen oberhalb des Schlackeschmelzpunktes, wobei
- der feingemahlene, kohlenstoffhaltige Brennstoff im Gemisch mit Sauerstoff oder einem sauerstoffangereicherten Gas von außen in horizontaler Richtung konzentrisch in einen feuerfesten Reaktionsraum eingeleitet wird, so dass der Brennstoff in einer Flugstromvergasung in dem Reaktionsraum zu Synthesegas reagiert, und
- der feingemahlene, kohlenstoffhaltige Brennstoff innerhalb einer ersten Brennerebene in den Reaktionsraum eingeleitet wird, die sich über einen in Gasströmungsrichtung vorderen Teilbereich der gesamten Höhe des Reaktionsraumes erstreckt, und
- das erhaltene Synthesegas unter einem Druck von 0,1 bis 8 MPa steht und in aufwärts oder abwärts führender Richtung aus dem Reaktionsraum ausgeführt wird, und
- das so erhaltene Synthesegas nach der Ausführung in einen zweiten Reaktionsraum geleitet wird, der als Auffangraum gestaltet ist und in dem das zugeführte Gas zur Kühlung mit einem kühleren gasförmigen, dampfförmigen oder flüssigen Stoff vermischt wird, und
- die Verweilzeit des Synthesegases nach der Einleitung des Brennstoffes im Flugstrom und vor Eintritt in den nachgeschalteten Auffangraum zur Kühlung im Flugstrom zwischen 1 und 10 Sekunden beträgt,
   und das dadurch gekennzeichnet ist, dass
- innerhalb einer zweiten oder weiteren Brennerebene oder einer zweiten oder weiteren Brennerlanzenebene, die sich über einen Teilbereich der gesamten Höhe der Reaktionsstrecke erstreckt und die sich in Gasrichtung stromabwärts gerichtet hinter der ersten Brennerebene befindet, ein nachwachsender Brennstoff im Gemisch mit einem dampf- oder sauerstoffhaltigen Gas konzentrisch in den Reaktionsraum eingeleitet wird, so dass eine weitere Flugstromvergasung entsteht, durch die die Temperatur des ausströmenden Gases sinkt und die Enthalpiedifferenz zur Zusatzvergasung der nachwachsenden Rohstoffe genutzt wird, und
- das Synthesegas über einen Austrittsstutzen in einen Abkühlraum geführt wird, und durch Brenner in dem Abkühlraum ein nachwachsender Brennstoff konzentrisch in den Abkühlraum eingeleitet wird, so dass eine weitere Reaktion mit dem Synthesegas erfolgt, wodurch die Temperatur des Synthesegases weiter gesenkt wird, und der nachwachsende Brennstoff durch tangential angeordnete Einleitungsvorrichtungen in den Abkühlraum eingeleitet wird, so dass der nachwachsende Brennstoff einen Drall erhält, wodurch sich die Verweilzeit des nachwachsenden Brennstoffes in dem Abkühlraum erhöht.

Durch die tangentiale Einleitung in den Abkühlraum wird die Effizienz der Vergasungsreaktion erhöht. Nach Einleitung des nachwachsenden Brennstoffes in dem Abkühlraum beträgt die Temperatur des Synthesegases typischerweise noch 1100 bis 1300 °C.

Zur Steuerung der Reaktion ist insbesondere die Verweilzeit des Brennstoffes mit Sauerstoff oder dem sauerstoffhaltigen Gas in dem Reaktionsraum von großer Bedeutung. Diese kann beispielsweise durch eine Erhöhung der Drallgeschwindigkeit in dem Reaktionsraum verlängert werden. In einer Ausführungsform der Erfindung beträgt die Verweilzeit in dem Reaktor nach der Einleitung des nachwachsenden Brennstoffes und vor Eintritt in den nachgeschalteten Reaktionsraum zur Kühlung im Flugstrom in dem Reaktor 1 bis 10 Sekunden. Dies kann durch die tangentiale Anordnung des Brenners oder der Brenner in den Reaktionsraum erreicht werden. In einer besonders bevorzugten Ausführungsform beträgt die Verweilzeit des Synthesegases nach der Einleitung des biologischen Brennstoffes und vor Eintritt in den nachgeschalteten Auffangraum zur Kühlung im Flugstrom in dem Reaktor 2 bis 5 Sekunden. Zur Steuerung der Reaktion kann der Reaktion auch Wasserdampf zugegeben werden, so dass der Brennstoff im Gemisch mit einem dampf- oder sauerstoffhaltigen Gas, Wasserdampf, oder einem sauerstoffhaltigen Gas und Wasserdampf in den Reaktionsraum eingeleitet wird. Bei dem sauerstoffhaltigen Gas kann es sich beispielhaft um Luft handeln.

Die Verweilzeit des Brennstoffes in dem Reaktionsraum kann insbesondere durch eine Änderung der Brennerausrichtung zur Verstärkung des tangentialen Dralls erhöht werden. Wird der Brennstoff durch tangential angeordnete Brenner der ersten Brennerebene tangential zum zylindrischen Reaktionsraum eingeleitet, so erhält der Flugstrom in dem Reaktionsraum einen Drall, wodurch sich die Verweilzeit des Brennstoffes in der Flugstromvergasung erhöht. Auf diese Weise kann die Vergasungsreaktion optimiert werden.

In einer weiteren Ausführungsform der Erfindung beträgt die vertikale Höhe der ersten Brennerebene 10 Prozent der Höhe des gesamten Reaktionsraumes und enthält 1 bis 6 Brenner. In einer weiteren Ausführungsform der Erfindung beträgt die vertikale Höhe der zweiten Brennerebene ebenfalls 10 Prozent der Höhe des gesamten Reaktionsraumes und enthält 1 bis 4 Brenner. Zwischen den Brennerebenen kann sich dann eine beliebig breite brennerfreie Ebene befinden. Als Brennerebene wird dabei eine Anordnung von Brennern verstanden, die in Kreisform konzentrisch um den zylindrischen Reaktionsraum angeordnet sind, wobei die Eindüsung des Brennstoffes in horizontaler Richtung erfolgt. Die Brenner müssen dabei nicht genau in einer Höhe angeordnet sein, jedoch ist zur Erlangung einer optimalen Vergasung eine Anordnung in derselben Höhe von Vorteil. Die Brenner sind dabei bevorzugt so angeordnet, dass diese den Brennstoff tangential in die Reaktionskammer eindüsen.

Die Temperatur der Vergasungsreaktion wird im Verlaufe der Gasführung durch die Zugabe des nachwachsenden Brennstoffes deutlich gesenkt. Typischerweise beträgt die Temperatur bei der Durchführung der Vergasungsreaktion 1400 bis 2000 °C. Durch die Zugabe des nachwachsenden Brennstoffes wird die Vergasungstemperatur vor Austritt aus dem Reaktionsraum in der Flamme merklich gesenkt. Die Flammentemperatur beträgt nach der Einleitungsstelle des nachwachsenden Brennstoffes 1400 bis 1600 °C. Typische Drücke zur Durchführung der Vergasungsreaktion sind 0,1 bis 8 MPa. Bevorzugte Drücke zur Durchführung der Vergasungsreaktion sind 1 bis 4 MPa. Zur Durchführung der Reaktion wird das wasserdampf- oder sauerstoffhaltige Reaktionsgas durch Kompressoren auf den benötigten Druck komprimiert. Typischerweise werden in der zweiten Brennerebene 5 bis 40 Prozent des gesamten Brennstoffes vergast. Dies ist jedoch nur ein Richtwert. Der kohlenstoffhaltige Brennstoff kann in der ersten Brennerebene durch tangential angeordnete Einleitungsvorrichtungen in den Reaktionsraum eingeleitet werden, so dass der kohlenstoffhaltige Brennstoff einen Drall erhält, wodurch sich die Verweilzeit des Brennstoffes in dem Reaktor erhöht.

An den Vergasungsreaktor schließt sich durch einen Austrittsstutzen ein Abkühlraum an, in dem eine Vermischung des heißen Synthesegases mit einem kühleren gas- oder dampfförmigen Fremdmedium erfolgt.

Zur Nachvergasung ist es prinzipiell möglich, in dem Abkühlraum in Gasströmungsrichtung zunächst die Eindüsung des gasförmigen, dampfförmigen oder flüssigen Stoffes zum Quenchen und dann die Einleitung des nachwachsenden Rohstoffes durchzuführen. Dies geht jedoch nur, wenn der Quenchprozess keine übermäßige Herunterkühlung des Synthesegases herbeiführt. Aus diesem Grund wird in einer bevorzugten Ausführungsform zunächst der nachwachsende Rohstoff in den Abkühlraum eingeleitet und dann ein Quenchen des Synthesegases durchgeführt.

Die Einleitung des nachwachsenden Rohstoffes in dem Abkühlraum kann ebenfalls im Gemisch mit einem feingemahlenen, kohlenstoffhaltigen Brennstoff erfolgen. Auf diese Weise kann auch die Temperatur des Synthesegases im Abkühlraum beeinflusst werden, da mit steigendem Kohlenstoffanteil des Brennstoffes, je nach verbleibendem Sauerstoffanteil, die Temperatur im Synthesegas weiter ansteigt. Auch die Eindüsung des Brennstoffes in dem Abkühlraum kann in mehreren Ebenen und erfolgt mit einem Drall.

Als Brennstoffe kommen für die erste Brennerebene des Reaktors insbesondere kohlenstoffhaltige, fossile Brennstoffe in Betracht. Dies sind beispielhaft Kohlen, Koks, Petrolkoks oder Bitumen. Die Brennstoffe werden vor der Vergasung kleingemahlen. Als Brennstoffe für die zweite Brennerebene oder die Brennerebene des Abkühlraumes kommen alle biologischen oder nachwachsenden Rohstoffe in Betracht. Dies sind insbesondere zerkleinerte, feingemahlene Energiepflanzen, Holz in beliebiger Form, Stroh, Gräser, Getreidepflanzen, biologische Reststoffe, Meerespflanzen oder Viehdung. Diese Brennstoffe werden für die Vergasung üblicherweise vorbehandelt.

Zu einer Vorbehandlung gehört insbesondere ein Mahlvorgang. Dies können aber auch zusätzliche Trocknungsschritte, Pressvorgänge, eine Torrefizierung oder Karbonisierungsschritte sein. Eine Torrefizierung bezeichnet dabei in allgemeiner Form die thermische Behandlung von Biomasse unter Luftabschluss bei relativ niedrigen Temperaturen von 200 bis 300 °C. Auch eine Kombination dieser Verfahrensschritte kann angewendet werden. Je nach Bedarf können auch die nachwachsenden Rohstoffe für die zweite Brennerebene oder die Brenner des Abkühlraumes mit kohlenstoffhaltigen, fossilen Brennstoffen gemischt werden. Auch ist es möglich, die erste und die zweite Brennerebene mit einem Gemisch von kohlenstoffhaltigen oder nachwachsenden Brennstoffen zu versorgen. Die Mischungsverhältnisse der Brennerebenen können auch verschieden sein. Auf diese Weise lässt sich bei geeigneter Reaktionsführung durch das Mischungsverhältnis von kohlenstoffhaltigem Brennstoff zu nachwachsendem Brennstoff in der zweiten Ebene des Reaktionsgefäßes oder in den weiteren Brennerebenen des Abkühlraumes die Temperatur des Synthesegases steuern.

Als Fremdmedien zur Herunterkühlung des Synthesegases können insbesondere Wasser, Wasserdampf oder zurückgeführtes und gekühltes Synthesegas verwendet werden. Es ist aber auch möglich, Fremdgase wie Stickstoff oder Kohlendioxid zu verwenden.

Die Erfindung betrifft auch eine Vorrichtung gemäß Anspruch 11 zur Durchführung von Vergasungsreaktionen mit einer nachfolgenden Einleitung von biologischen Brennstoffen in den Vergaser. Diese umfasst typischerweise einen Druckvergasungsreaktor, der einen Reaktionsraum umgeben von einem druckdichten Mantelgefäß darstellt. Zur Ausführung kommt ein Vergasungsreaktor, wie er im Stand der Technik üblich ist. Geeignete Ausführungsformen werden beispielhaft in der WO 2009118082 A1 aufgeführt.

Beansprucht wird insbesondere eine Vorrichtung zur Nutzung der Enthalpie eines Synthesegases durch Zusatz- und Nachvergasung von nachwachsenden Brennstoffen, wobei
- diese aus einem feuerfesten Reaktionsraum besteht, das zur Vergasung von festen, kohlenstoffhaltigen Brennstoffen durch Umsetzung mit einem sauerstoffhaltigen oder wasserdampf- und sauerstoffhaltigen Gas geeignet ist, und
- dieser feuerfeste Reaktionsraum einen oder mehrere Brenner enthält, die in einer Brennerebene konzentrisch angeordnet sind und über die ein Brennstoff in horizontaler Richtung in den Reaktionsraum oder vom Deckelbereich ausgehend einleitbar ist, und
- sich in vertikaler Richtung abwärts oder aufwärts führend an diesen Reaktionsraum ein zweiter Raum anschließt, der als Auffangraum gestaltet ist, und der mit Zuführungseinrichtungen für gasförmige, dampfförmige oder flüssige Kühlmedien ausgestattet ist, und
- sich zwischen der ersten Brennerebene in dem Reaktionsraum und dem Auffangraum weitere Brenner befinden, die ebenfalls konzentrisch in einer Brennerebene angeordnet sind, und über die ein nachwachsender Brennstoff in horizontaler Richtung in den Reaktionsraum einleitbar ist, und
- sich zwischen dem Reaktionsraum und dem Auffangraum ein Ausfuhrstutzen befindet, durch den ein Abkühlraum gebildet wird, und
- sich in dem Abkühlraum weitere Brenner befinden, die ebenfalls konzentrisch in einer Brennerebene angeordnet sind, über die ein nachwachsender Brennstoff in horizontaler Richtung in den Abkühlraum einleitbar ist, und
- die Brenner in dem Abkühlraum tangential zur zylinderförmigen Brennerwand ausgerichtet sind, so dass die Flugstromströmung bei der Durchführung der Vergasungsreaktion einen Drall erhält,
   und die dadurch gekennzeichnet ist, dass
- die Wand des Reaktionsraumes an der Austrittstelle für das Synthesegas mit einem Vorsprung ausgestattet ist, so dass sich die Zuführungsbrenner für nachwachsenden Rohstoff in dem Abkühlraum im Strömungsschatten des Vorsprunges befinden.

Der Reaktionsraum umfasst Einleitungsvorrichtungen für Brennstoff und das Reaktionsgas. Zur Ausführung der erfindungsgemäßen Vorrichtung ist es möglich, das erzeugte Synthesegas in abwärts führender Richtung oder in aufwärts führender Richtung aus dem Reaktionsraum auszuführen. Eine zweite Brennerebene zur Zuführung von nachwachsenden Brennstoffen befindet sich gasstromabwärts von der ersten Brennerebene. In beiden Fällen befindet sich die zweite Brennerebene zwischen der ersten Brennerebene und dem Abkühlraum zur Herunterkühlung.

In einer Ausführungsform der Erfindung beträgt die vertikale Höhe der ersten Brennerebene im Reaktionsraum 10 Prozent der Höhe des gesamten Reaktionsraumes und enthält 1 bis 6 Brenner. In einer weiteren Ausführungsform der Erfindung beträgt die vertikale Höhe der zweiten Brennerebene ebenfalls 10 Prozent der Höhe des gesamten Reaktionsraumes und enthält 1 bis 4 Brenner. Zwischen den Brennerebenen kann sich dann eine beliebig breite brennerfreie Ebene befinden. Als Brennerebene wird dabei eine Anordnung von Brennern verstanden, die in Kreisform konzentrisch um den zylindrischen Reaktionsraum angeordnet sind, wobei die Eindüsung des Brennstoffes in horizontaler Richtung erfolgt. Die Brenner müssen dabei nicht genau in einer Höhe angeordnet sein, jedoch ist zur Erlangung einer optimalen Vergasung eine Anordnung in derselben Höhe von Vorteil.

Es ist auch möglich, eine weitere Brennerebene in den oberen Bereich des Reaktionsraumes einzubauen, wobei sich diese bevorzugt im Deckelbereich des Reaktionsraumes befindet, so dass diese den Brennstoff vertikal oder näherungsweise vertikal von oben in den Reaktionsraum eindüst. Auch in der zweiten Brennerebene zur Eindüsung des nachwachsenden Rohstoffes sind die Brenner vorteilhaft konzentrisch innerhalb einer Brennerebene angeordnet. In dieser Brennerebene befinden sich typischerweise 1 bis 4 Brenner.

Die Brenner können beliebig gestaltet sein, sind jedoch so geartet, dass sie einen feinverteilten Brennstoff in den Reaktionsraum eindüsen können. Bevorzugt sind diese als Brennerlanzen oder Düsen gestaltet. Diese düsen den Brennstoff im Gemisch mit einem sauerstoffhaltigen Gas ein. Bei den Brennern der ersten Ebene handelt es sich bevorzugt um Düsen, die den Brennstoff im Gemisch mit einem sauerstoffhaltigen Gas eindüsen.

Die Brenner der ersten Brennerebene können so angeordnet sein, dass diese tangential zur zylinderförmigen Brennerwand ausgerichtet sind, so dass die Flugströmung einen Drall erhält. Auch die Brenner der zweiten Brennerebene können tangential zur zylinderförmigen Brennerwand ausgerichtet sein, so dass die Flugstromströmung hinter der ersten Brennerebene bei der Durchführung der Vergasungsreaktion einen weiteren Drall erhält.

Die Brenner können durch spezielle Vorrichtungen gegen fließende, glutflüssige Schlacke geschützt sein. Beispielhaft befindet sich in Schlackefließrichtung oberhalb der Brenner der zweiten Brennerebene mindestens ein gekühlter Schlackeabweiser, der die Brenner vor von der Wandung ablaufender glutflüssiger Schlacke schützt. Dabei kann es sich beispielhaft um einen Stahlschurz handeln, der sich in Schlackefließrichtung oberhalb der Brenner befindet, und der mit einer indirekten Kühlung ausgerüstet ist und der die Brenner vor mit dem Gasstrom ablaufender glutflüssiger Schlacke schützt. Geeignet sind jedoch auch Keramikvorsprünge oder Mauerwerk. Die Brenner der zweiten Brennerebene können auch in einer Brennernische angeordnet sein. Der Reaktionsraum wird nach unten durch einen Ausführungsstutzen für das heiße Synthesegas abgeschlossen, wenn dieses in vertikaler Richtung ausgeführt wird.

Wird das Reaktionsgas aus dem Reaktionsraum in abwärts führender Richtung ausgeführt, so befindet sich in einer typischen Ausführungsform unterhalb des Reaktionsraums ein Auffangraum für das Synthesegas. In einer weiteren Ausführnungsform befindet sich zwischen dem Auffangraum und dem Abkühlraum ein Ausfuhrstutzen, wodurch ein vertikaler Abkühlraum gebildet wird. Sowohl der Auffangraum als auch der Abkühlraum können Vorrichtungen zur Zuführung von gasförmigen, dampfförmigen oder flüssigen Kühlungsmedien besitzen.

Die genannten Räume können auch einen Sprühquench, einen Wasserquench oder ein Wasserbad umfassen. Der Wasserquench kann beispielhaft als Wasserfilm gestaltet sein, der durch einen Kontakt mit dem erhaltenen Nutzgas dieses herunterkühlt. Der Auffangraum enthält dann einen oder mehrere Ausführungsstutzen für das erhaltene Synthesegas. In dem darunterliegenden Wasserbad werden die bei der Vergasung anfallenden festen Anfallstoffe gesammelt und ebenfalls über einen oder mehrere Stutzen aus dem Reaktionsraum ausgeführt.

In den Abkühlraum, der sich zwischen Reaktionsgefäß und Auffangraum befindet, werden erfindungsgemäß ebenfalls nachwachsende Brennstoffe tangential eingeleitet. Hierzu sind in einer Ausführungsform in dem Abkühlraum in konzentrischer Anordnung Brenner vorhanden, über die ein nachwachsender Brennstoff in tangentialer Richtung in den Abkühlraum einleitbar ist. Die Einleitung des nachwachsenden Rohstoffes in den Abkühlraum kann auch im Gemisch mit einem feingemahlenen, kohlenstoffhaltigen Brennstoff erfolgen. Auf diese Weise kann auch die Temperatur des Synthesegases im Abkühlraum beeinflusst werden, da mit steigendem Kohlenstoffanteil des Brennstoffes, je nach verbleibendem Sauerstoffanteil, die Temperatur im Synthesegas weiter ansteigt.

Die Brenner in dem Abkühlraum sind mit Vorsprüngen oder Nischen gegen die ablaufende glutflüssige Schlacke geschützt, indem die Wand des Reaktionsraumes an der Austrittstelle für das Synthesegas mit einem Vorsprung ausgestattet ist, so dass sich die Zuführungsbrenner für nachwachsenden Rohstoff in dem Abkühlraum im Strömungsschatten des Vorsprunges befinden.

Um die Verweilzeit und die Durchmischung weiter zu erhöhen, sind die Brenner in dem Abkühlraum tangential zur zylinderförmigen Brennerwand angeordnet, so dass der Brennstoff tangential in den Abkühlraum eingeleitet wird. Dadurch erhält der Brennstoff in dem Abkühlraum einen Drall, wodurch sich die Verweilzeit des nachwachsenden Brennstoffes in dem Abkühlraum erhöht. Die Einleitung oder Eindüsung erfolgt beispielhaft unter Druck mit einem Fremdgas. Auch in dem Abkühlraum können die Brenner in mehreren Ebenen angeordnet sein. Die Eindüsung des Brennstoffes in dem Abkühlraum kann somit in mehreren Ebenen erfolgen. Bei den Brennern der zweiten Ebene im Reaktionsraum oder den weiteren Ebenen handelt es sich ebenfalls bevorzugt um Düsen, die den Brennstoff im Gemisch mit einem sauerstoffhaltigen Gas eindüsen.

Unterhalb des Ausführungsstutzens ist ein Wasserbad für die anfallenden Feststoffe vorgesehen, das zum Auffangen und Abkühlen der festen Anfallstoffe einer Kohlevergasungsreaktion geeignet ist. Dieses kann seinerseits mit Auslassvorrichtungen für die heruntergekühlten Feststoffe ausgestattet sein. Oberhalb des Wasserbades zum Auffangen der Feststoffe und unterhalb der Zuführungseinrichtungen für die gasförmigen, dampfförmigen oder flüssigen Fremdmedien befindet sich typischerweise ein Ausführungsstutzen für heruntergekühltes Synthesegas. Dieser ist seitlich angebracht, so dass das Synthesegas und gasförmige Reaktionsprodukte in seitlicher Richtung ausgeführt wird.

Die erfindungsgemäße Vorrichtung und das erfindungsgemäße Verfahren besitzen den Vorteil der Herunterführung der Temperatur eines durch Kohlevergasung hergestellten Synthesegases unter Ausnutzung der überschüssigen Wärmeenthalpie durch eine zusätzliche Vergasung von nachwachsenden Brennstoffen. Der erfindungsgemäße Prozess erbringt eine wesentlich bessere Ausnutzung der Enthalpie einer Vergasungsreaktion. Auch kann eine gekoppelte Vergasung von Kohle und nachwachsendem Rohstoff unter gleichzeitiger Reduzierung des Aschegehaltes des erhaltenen Synthesegases erreicht werden.

Die erfindungsgemäße Ausgestaltung einer Vorrichtung zur Erzeugung von Gasen wird anhand von drei Zeichnungen genauer erläutert, wobei das erfindungsgemäße Verfahren nicht auf diese Ausführungsformen beschränkt ist. FIG. 1 zeigt einen Vergasungsreaktor zur Zusatzvergasung von nachwachsenden Brennstoffen. FIG. 2 zeigt einen Vergasungsreaktor zur Zusatz und Nachvergasung von nachwachsenden Brennstoffen, in dem nachwachsender Brennstoff in den Abkühlraum eingeleitet wird. FIG. 3 zeigt den unteren Teil des Reaktionsraums mit Abkühlraum.

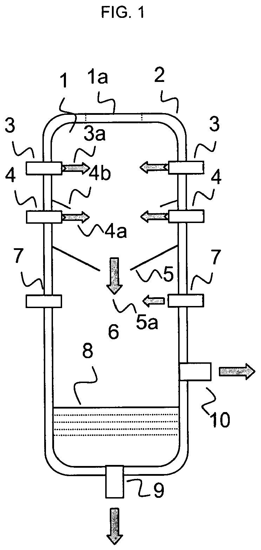

FIG. 1 zeigt einen nicht erfindungsgemäßen Reaktor zur Zusatzvergasung von nachwachsenden Brennstoffen. In einem gekühlten Reaktionsraum (1) mit einem Deckel (1a), der sich in einem druckdichten Mantelgefäß (2) befindet, wird zur Vergasung von festen, kohlenstoffhaltigen Brennstoffen ein kohlenstoffhaltiger Brennstoff im Gemisch mit Dampf oder einem sauerstoffhaltigen Gas (3a) unter Druck eingeleitet. Der kohlenstoffhaltige, feste und feingemahlene Brennstoff wird mit einem sauerstoffhaltigen Reaktionsgas über Brenner oder Brennerlanzen (3) in die Brennkammer eingeleitet, wobei die Brenner horizontal und konzentrisch angeordnet sind. Die Zahl der Brenner in der Brennerebene beträgt idealerweise 1 bis 6. Über Brenner oder Brennerlanzen (4), die in einer weiteren Brennerebene unterhalb der ersten Brennerebene sitzen, wird ein Brennstoff aus feingemahlenen nachwachsenden Brennstoffen (4a) im Gemisch mit dampf- oder einem sauerstoffhaltigen Gas in die Brennkammer des Reaktionsraumes zur Vergasung von festen kohlenstoffhaltigen Brennstoffen eingeleitet. Durch diese Anordnung entsteht eine Flugstromvergasung, die den Brennstoff in einer Verweilzeit von 1 bis 10 Sekunden zu Synthesegas umsetzt. Die Brenner der zweiten Brennerebene sind durch gekühlte Schlackeabweiser (4b) vor herabfließender glutflüssiger Schlacke geschützt. Durch die endotherme Vergasung des nachwachsenden Rohstoffes wird die Temperatur des aus dem Reaktionsraum ausströmenden Synthesegases (5a) deutlich gesenkt. Das Synthesegas wird über einen Austrittsstutzen (5) aus dem Reaktionsraum (1) ausgeführt und in einen Reaktionsraum zum Herunterkühlen (6) geleitet, wo es mit einem kühleren gasförmigen, dampfförmigen oder flüssigen Fremdmedium oder Wasser über Zugabedüsen (7) vermischt wird. Die anfallenden Feststoffe werden in ein Wasserbad (8) geführt, abkühlt und nach der Abkühlung über einen Austrittsstutzen (9) ausgeschleust. Das erhaltene Synthesegas wird über einen seitlichen Austrittsstutzen (10) entnommen.

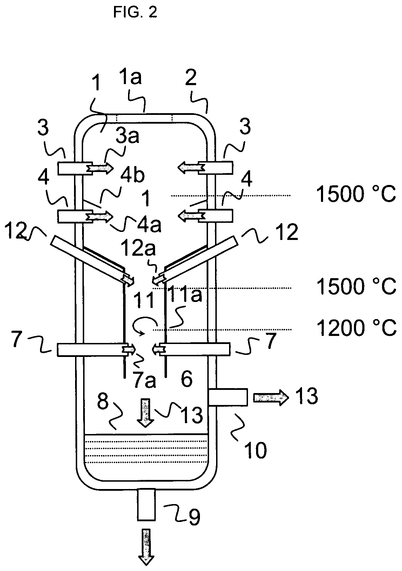

FIG. 2 zeigt den gleichen nicht erfindungsgemäßen Reaktor mit einem Ausführungsstutzen, der weitere Brenner enthält. Das Synthesegas wird über einen Austrittsstutzen **(11a)** aus dem Reaktionsraum **(1)** ausgeführt. Der Austrittsstutzen (**11a**) mündet in einen Abkühlraum **(11)** zum Herunterkühlen. Im Eingangsteil des Abkühlraums **(11)** befindet sich ein Einleitungsstutzen oder Brenner für nachwachsenden Brennstoff **(12).** Erfindungsgemäß wird an dieser Stelle über Zugabedüsen **(12)** der nachwachsende Brennstoff **(12a)** tangential eingeleitet. Dieser reagiert in dem Abkühlraum **(11)** mit dem Synthesegas. Durch die endotherme Vergasung des nachwachsenden Rohstoffes wird die Temperatur des Synthesegases in dem Abkühlraum **(11)** deutlich gesenkt. Im Eingangsbereich des Abkühlraums **(11)** beträgt die Temperatur typischerweise 1500 °C, während diese nach der Reaktion 1200°C beträgt. Daran anschließend wird über einen Einleitungsstutzen **(7)** ein dampfförmiges, gasförmiges oder flüssiges Fremdmedium **(7a)** eingeleitet. Das Synthesegas **(13)** wird in einen Auffangraum **(6)** zum Herunterkühlen geleitet. Die anfallenden Feststoffe werden in ein Wasserbad **(8)** geführt, abgekühlt und nach der Abkühlung über einen Austrittsstutzen **(9)** für Feststoffe ausgeschleust. Das erhaltene Synthesegas **(13)** wird über einen seitlichen Austragsstutzen **(10)** für Synthesegas **(13)** entnommen.

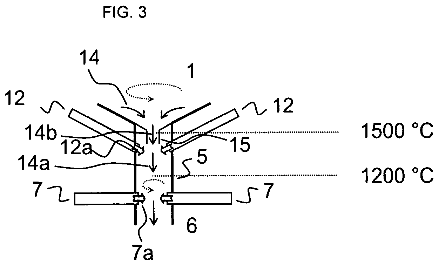

FIG. 3 zeigt den Austrittsstutzen (**11a**), der das Synthesegas aus dem Reaktionsraum **(1)** ausführt und dabei einen Abkühlraum **(11)** bildet. In dem Reaktionsraum **(1)** wird eine Flugstromvergasung durchgeführt. Das Synthesegas in dem Reaktionsraum besitzt in dieser Ausführungsform als Strömungsrichtung **(14)** einen Drall und verlässt den Reaktionsraum **(1)** nach einer durchschnittlichen Verweilzeit von 1 bis 10 Sekunden. Der Synthesegasstrom verlässt den Vergasungsreaktor **(1)** in vertikal abwärtsführender Richtung **(14a)** in den Abkühlraum **(11).** Erfindungsgemäß wird kurz nach Verlassen des Reaktionsraumes **(1)** in das heiße Synthesegas ein nachwachsender Brennstoff **(12a)** tangential eingeleitet, wobei nach Durchlaufen einer Reaktionsstrecke ein Fremdmedium **(7a)** zum Abkühlen in den Abkühlraum eingeleitet wird, der hier mit einem Wandvorsprung **(15)** des Reaktionsraumes **(1)** ausgestattet ist, wodurch sich an der Einleitungsstelle des Synthesegasstroms **(14b)** in den Abkühlraum eine Einengung bildet. Dadurch steigt die Strömungsgeschwindigkeit in dem Abkühlraum **(11)** an. Im Strömungsschatten dieses Wandvorsprungs wird der nachwachsende Brennstoff **(12a)** eingeleitet. Dadurch kommt es typischerweise zu einer besseren Vermischung des Brennstoffes mit dem Synthesegas. Zusätzlich werden die Brenner vor der Bedeckung mit glutflüssiger Schlacke geschützt. Nach Durchlaufen einer Reaktionsstrecke wird ein Fremdmedium **(7a)** zum Abkühlen eingeleitet.

### Bezugszeichenliste

- 1: Reaktionsraum zur Vergasung
- 1a: Deckel des Reaktionsraumes
- 2: Druckdichtes Mantelgefäß
- 3: Brennerlanzen für festen, kohlenstoffhaltigen Brennstoff
- 3a: Kohlenstoffhaltiger Brennstoff im Gemisch mit einem sauerstoffhaltigen Gas
- 4: Brennerlanzen für festen, nachwachsenden Rohstoff als Brennstoff einer weiteren Brennerebene
- 4a: Nachwachsender Brennstoff im Gemisch mit einem dampf- und sauerstoffhaltigen Gas
- 4b: Gekühlter Schlackeabweiser zum Schutz vor ablaufender glutflüssiger Schlacke
- 5: Austrittsstutzen für Synthesegas aus dem Reaktionsraum
- 5a: Ausströmendes Synthesegas aus dem Reaktionsraum
- 6: Auffangraum zum Herunterkühlen des Synthesegases
- 7: Zugabedüsen für kühleres Fremdmedium
- 7a: Dampfförmiges, flüssiges der gasförmiges Fremdmedium
- 8: Wasserbad für auszuschleusende Feststoffe
- 9: Austrittsstutzen für Wasser und auszuschleusende Feststoffe
- 10: Seitlicher Austragssstutzen für heruntergekühltes Synthesegas
- 11: Abkühlraum
- 11a: Austrittsstutzen aus dem Reaktor für Synthesegas und Feststoffe
- 12: Zugabedüsen für nachwachsenden Brennstoff im Abkühlraum
- 12a: Nachwachsender Brennstoff
- 13: Synthesegas
- 14: Strömungsrichtung des Synthesegases in dem Reaktionsraum
- 14a: Strömungsrichtung des Synthesegases beim Verlassen des Reaktionsraumes
- 14b: Einleitungsgasstrom des Synthesegases in den Abkühlraum
- 15: Wandvorsprung des Reaktionsraumes mit Einengung der Strömung

## Patentansprüche

1. Verfahren zur Nutzung der Enthalpie eines Synthesegases durch Zusatz- und Nachvergasung von nachwachsenden Brennstoffen, wobei
• der feingemahlene, kohlenstoffhaltige Brennstoff (3a) im Gemisch mit Sauerstoff oder einem sauerstoffangereicherten Gas von außen in horizontaler Richtung konzentrisch oder abwärts gerichtet von oben in einen feuerfesten Reaktionsraum (1) eingeleitet wird, so dass der Brennstoff in einer Flugstromvergasung in dem Reaktionsraum (1) zu Synthesegas reagiert, und
• der feingemahlene, kohlenstoffhaltige Brennstoff (3a) innerhalb einer ersten Brennerebene (3) in den Reaktionsraum (1) eingeleitet wird, die sich über einen in Gasströmungsrichtung vorderen Teilbereich der gesamten Höhe des Reaktionsraumes (1) erstreckt, und
• das erhaltene Synthesegas unter einem Druck von 0,1 bis 8 MPa steht und in aufwärts oder abwärts führender Richtung aus dem Reaktionsraum (1) ausgeführt wird, und
• das so erhaltene Synthesegas nach der Ausführung in einen zweiten Reaktionsraum geleitet wird, der als Auffangraum (6) gestaltet ist und in dem das zugeführte Gas zur Kühlung mit einem kühleren gasförmigen, dampfförmigen oder flüssigen Stoff (7a) vermischt wird, und
• die Verweilzeit des Synthesegases nach der Einleitung des Brennstoffes im Flugstrom und vor Eintritt in den nachgeschalteten Auffangraum (6) zur Kühlung im Flugstrom zwischen 1 und 10 Sekunden beträgt, und
• innerhalb einer zweiten oder weiteren Brennerebene (4) oder einer zweiten oder weiteren Brennerlanzenebene, die sich ebenfalls über einen Teilbereich der gesamten Höhe der Reaktionsstrecke erstreckt und die sich in Gasrichtung stromabwärts gerichtet hinter der ersten Brennerebene (3) befindet, ein nachwachsender Brennstoff (4a) konzentrisch in den Reaktionsraum (1) eingeleitet wird, so dass eine weitere Flugstromvergasung entsteht, durch die die Temperatur des ausströmenden Gases sinkt und die Enthalpiedifferenz zur Zusatzvergasung von nachwachsenden Rohstoffen genutzt wird,
**dadurch gekennzeichnet, dass**
• das Synthesegas über einen Austrittsstutzen (11 a) in einen Abkühlraum (11) geführt wird, und durch Brenner (12) in dem Abkühlraum (11) ein nachwachsender Brennstoff (12a) konzentrisch in den Abkühlraum (11) eingeleitet wird, so dass eine weitere Reaktion mit dem Synthesegas erfolgt, wodurch die Temperatur des Synthesegases weiter gesenkt wird, und der nachwachsende Brennstoff (12a) durch tangential angeordnete Einleitungsvorrichtungen (12) in den Abkühlraum (11) eingeleitet wird, so dass der nachwachsende Brennstoff (12a) einen Drall erhält, wodurch sich die Verweilzeit des nachwachsenden Brennstoffes (12a) in dem Abkühlraum (11) erhöht.

2. Verfahren zur Nutzung der Enthalpie eines Synthesegases durch Zusatz- und Nachvergasung von nachwachsenden Brennstoffen nach Anspruch 1, **dadurch gekennzeichnet, dass** der nachwachsende Brennstoff (4a) im Gemisch mit einem dampf- oder sauerstoffhaltigen Gas, Wasserdampf, oder einem sauerstoffhaltigen Gas und Wasserdampf in den Reaktionsraum (1) eingeleitet wird.

3. Verfahren zur Nutzung der Enthalpie eines Synthesegases durch Zusatz- und Nachvergasung von nachwachsenden Brennstoffen, nach einem der Ansprüche 1 oder 2, **dadurch gekennzeichnet, dass** die Verweilzeit des Synthesegases nach der Einleitung des nachwachsenden Brennstoffes (4a) und vor Eintritt in einen dem Reaktor nachgeschalteten Auffangraum (6) zur Kühlung im Flugstrom 2 bis 5 Sekunden beträgt.

4. Verfahren zur Nutzung der Enthalpie eines Synthesegases durch Zusatz- und Nachvergasung von nachwachsenden Brennstoffen nach einem der Ansprüche 1 bis 3, **dadurch gekennzeichnet, dass** in dem Auffangraum (6) an der Einleitungsstelle für den nachwachsenden Brennstoff Temperaturen von 1400 - 1600 °C herrschen.

5. Verfahren zur Nutzung der Enthalpie eines Synthesegases durch Zusatz- und Nachvergasung von nachwachsenden Brennstoffen nach einem der Ansprüche 1 bis 4, **dadurch gekennzeichnet, dass** der kohlenstoffhaltige Brennstoff (3a) durch tangential angeordnete Einleitungsvorrichtungen (3) der ersten Brennerebene in den Reaktionsraum (1) eingeleitet wird, so dass der kohlenstoffhaltige Brennstoff einen Drall erhält, wodurch sich die Verweilzeit des Brennstoffes in dem Reaktor (1) erhöht.

6. Verfahren zur Nutzung der Enthalpie eines Synthesegases durch Zusatz- und Nachvergasung von nachwachsenden Brennstoffen nach Anspruch 1, **dadurch gekennzeichnet, dass** in dem Abkühlraum (11) in Gasströmungsrichtung zunächst die Einleitung des nachwachsenden Brennstoffes (12a) und dann die Eindüsung des gasförmigen, dampfförmigen oder flüssigen Stoffes (7a) erfolgt.

7. Verfahren zur Nutzung der Enthalpie eines Synthesegases durch Zusatz- und Nachvergasung von nachwachsenden Brennstoffen nach einem der Ansprüche 1 bis 6, **dadurch gekennzeichnet, dass** als nachwachsender Brennstoff gehäckselte zerkleinerte, feingemahlene Energiepflanzen, Holz in beliebiger Form, Stroh, Gräser, Getreidepflanzen, biologische Reststoffe, Meerespflanzen oder Viehdung verwendet werden.

8. Verfahren zur Nutzung der Enthalpie eines Synthesegases durch Zusatz- und Nachvergasung von nachwachsenden Brennstoffen nach einem der Ansprüche 1 bis 7, **dadurch gekennzeichnet, dass** die nachwachsenden Rohstoffe vor der Vergasung einer Vorbehandlung unterzogen werden, wobei die Vorbehandlungsschritte eine Trocknung, eine Karbonisierung, eine Mahlung oder eine Kombination dieser Schritte umfassen.

9. Verfahren zur Nutzung der Enthalpie eines Synthesegases durch Zusatz- und Nachvergasung von nachwachsenden Brennstoffen nach einem der Ansprüche 1 bis 8, **dadurch gekennzeichnet, dass** als Brennstoff für die Brenner der zweiten Brennerebene (4) oder im Abkühlraum (12) nachwachsende Brennstoffe im Gemisch mit kohlenstoffhaltigen Brennstoffen verwendet werden.

10. Verfahren zur Nutzung der Enthalpie eines Synthesegases durch Zusatz- und Nachvergasung von nachwachsenden Brennstoffen nach Anspruch 9, **dadurch gekennzeichnet, dass** als Brennstoff für die erste (3) und zweite Brennerebene (4) im Reaktionsgefäß und für die Brenner im Abkühlraum (12) nachwachsende Rohstoffe im Gemisch mit kohlenstoffhaltigen Brennstoffen verwendet werden, wobei die Mischungsverhältnisse verschieden sind.

11. Vorrichtung zur Nutzung der Enthalpie eines Synthesegases durch Zusatz- und Nachvergasung von nachwachsenden Brennstoffen, wobei
• diese aus einem feuerfesten Reaktionsraum (1) besteht, das zur Vergasung von festen, kohlenstoffhaltigen Brennstoffen durch Umsetzung mit einem sauerstoffhaltigen oder wasserdampf- und sauerstoffhaltigen Gas geeignet ist, und
• dieser feuerfeste Reaktionsraum (1) einen oder mehrere Brenner (3) enthält, die in einer Brennerebene (3) konzentrisch angeordnet sind und über die ein Brennstoff in horizontaler Richtung in den Reaktionsraum (1) oder vom Deckelbereich (1a) ausgehend einleitbar ist, und
• sich in vertikaler Richtung abwärts oder aufwärts führend an diesen Reaktionsraum (1) ein zweiter Raum anschließt, der als Auffangraum (6) gestaltet ist, und der mit Zuführungseinrichtungen (7) für gasförmige, dampfförmige oder flüssige Kühlmedien ausgestattet ist, und
• sich zwischen der ersten Brennerebene (3) in dem Reaktionsraum (1) und dem Auffangraum (6) weitere Brenner (4) befinden, die ebenfalls konzentrisch in einer Brennerebene angeordnet sind, und über die ein nachwachsender Brennstoff (4a) in horizontaler Richtung in den Reaktionsraum (1) einleitbar ist, und
• sich zwischen dem Reaktionsraum (1) und dem Auffangraum (6) ein Ausfuhrstutzen (11a) befindet, durch den ein Abkühlraum (11) gebildet wird, und
• sich in dem Abkühlraum (11) weitere Brenner (12) befinden, die ebenfalls konzentrisch in einer Brennerebene angeordnet sind, über die ein nachwachsender Brennstoff (12a) in horizontaler Richtung in den Abkühlraum (11) einleitbar ist, und
• die Brenner (12) in dem Abkühlraum (11) tangential zur zylinderförmigen Brennerwand ausgerichtet sind, so dass die Flugstromströmung bei der Durchführung der Vergasungsreaktion einen Drall erhält,
**dadurch gekennzeichnet, dass**
• die Wand des Reaktionsraumes (1) an der Austrittsstelle für das Synthesegas (14b) mit einem Vorsprung (15) ausgestattet ist, so dass sich die Zuführungsbrenner (12) für nachwachsenden Rohstoff (12a) in dem Abkühlraum (11) im Strömungsschatten des Vorsprunges (15) befinden.

12. Vorrichtung zur Nutzung der Enthalpie eines Synthesegases durch Zusatz- und Nachvergasung von nachwachsenden Brennstoffen nach Anspruch 11, **dadurch gekennzeichnet, dass** die erste Brennerebene (3) eine vertikale Höhe von 10 Prozent der gesamten Höhe des gesamten Reaktionsraumes (1) besitzt und 1 bis 6 Brenner enthält.

13. Vorrichtung zur Nutzung der Enthalpie eines Synthesegases durch Zusatz- und Nachvergasung von nachwachsenden Brennstoffen nach einem der Ansprüche 11 oder 12, **dadurch gekennzeichnet, dass** die zweite Brennerebene (4) eine vertikale Höhe von 10 Prozent der gesamten Höhe des gesamten Reaktionsraumes (1) besitzt und 1 bis 4 Brenner enthält.

14. Vorrichtung zur Nutzung der Enthalpie eines Synthesegases durch Zusatz- und Nachvergasung von nachwachsenden Brennstoffen nach einem der Ansprüche 11 bis 13, **dadurch gekennzeichnet, dass** die Brenner (3) der ersten Brennerebene tangential zur zylinderförmigen Brennerwand ausgerichtet sind, so dass die Flugstromströmung bei der Durchführung der Vergasungsreaktion einen Drall erhält.

15. Vorrichtung zur Nutzung der Enthalpie eines Synthesegases durch Zusatz- und Nachvergasung von nachwachsenden Brennstoffen nach Anspruch 14, **dadurch gekennzeichnet, dass** auch die Brenner der zweiten Brennerebene (4) tangential zur zylinderförmigen Brennerwand ausgerichtet sind, so dass die Flugstromströmung hinter der ersten Brennerebene (3) bei der Durchführung der Vergasungsreaktion einen weiteren Drall erhält.

16. Vorrichtung zur Nutzung der Enthalpie eines Synthesegases durch Zusatz- und Nachvergasung von nachwachsenden Brennstoffen nach einem der Ansprüche 11 bis 15, **dadurch gekennzeichnet, dass** sich in Schlackefließrichtung oberhalb der Brenner der zweiten Brennerebene (4) ein gekühlter Schlackeabweiser (4b) befindet, der die Brenner (4) vor an der Wandung ablaufender glutflüssiger Schlacke schützt.

17. Vorrichtung zur Nutzung der Enthalpie eines Synthesegases durch Zusatz- und Nachvergasung von nachwachsenden Brennstoffen nach Anspruch 16, **dadurch gekennzeichnet, dass** es sich bei dem gekühlten Schlackeabweiser (4b) um einen Stahlschurz handelt, der sich in Schlackefließrichtung oberhalb der Brenner (4) befindet, der mit einer indirekten Kühlung ausgerüstet ist und der die Brenner (4) vor an der Wandung ablaufender flüssiger Schlacke schützt.

18. Vorrichtung zur Nutzung der Enthalpie eines Synthesegases durch Zusatz- und Nachvergasung von nachwachsenden Brennstoffen nach einem der Ansprüche 11 bis 17, **dadurch gekennzeichnet, dass** die Brenner (4) der zweiten Brennerebene in einer Brennernische angeordnet sind.

19. Vorrichtung zur Nutzung der Enthalpie eines Synthesegases durch Zusatz- und Nachvergasung von nachwachsenden Brennstoffen nach einem der Ansprüche 11 bis 18, **dadurch gekennzeichnet, dass** es sich bei den Brennern der ersten Ebene (3) um Düsen handelt, die den Brennstoff (3a) im Gemisch mit einem sauerstoffhaltigen Gas eindüsen.

20. Vorrichtung zur Nutzung der Enthalpie eines Synthesegases durch Zusatz- und Nachvergasung von nachwachsenden Brennstoffen nach einem der Ansprüche 11 bis 19, **dadurch gekennzeichnet, dass** die Brenner für die Einleitung des nachwachsenden Brennstoffes (12a) in den Abkühlraum (11) in mehreren Ebenen angeordnet sind.

21. Vorrichtung zur Nutzung der Enthalpie eines Synthesegases durch Zusatz- und Nachvergasung von nachwachsenden Brennstoffen nach einem der Ansprüche 11 bis 20, **dadurch gekennzeichnet, dass** es sich bei den Brennern (4,12) der weiteren Ebenen um Düsen handelt, die den Brennstoff (4a,12a) im Gemisch mit einem sauerstoffhaltigen Gas eindüsen.

22. Vorrichtung zur Nutzung der Enthalpie eines Synthesegases durch Zusatz- und Nachvergasung von nachwachsenden Brennstoffen nach Anspruch 11 bis 21, **dadurch gekennzeichnet, dass** sich unterhalb des Auffangraumes (6), der mit Zuführungseinrichtungen (7) für gasförmige, dampfförmige oder flüssige Stoffe ausgerüstet ist, ein Wasserbad (8) befindet, das zum Auffangen und Abkühlen der festen Anfallstoffe der Kohlevergasungsreaktion geeignet ist.

23. Vorrichtung zur Nutzung der Enthalpie eines Synthesegases durch Zusatz- und Nachvergasung von nachwachsenden Brennstoffen nach Anspruch 11 bis 22, **dadurch gekennzeichnet, dass** unterhalb des Auffangraumes (6), der mit Zuführungseinrichtungen für gasförmige, dampfförmige oder flüssige Kühlmedien (7) ausgerüstet ist, ein seitlich wegführender Auslass (10) für gasförmige Reaktionsprodukte vorhanden ist.

## Claims

1. A process for utilizing the enthalpy of a syngas by additional and post-gasification of regrowing fuels, wherein:
• the finely ground, carbon-containing fuel (3a) is introduced, as a mixture with oxygen or an oxygen-enriched gas, from the outside in a horizontal direction concentrically or directed downward from the top into a refractory reaction chamber (1), in a manner such that the fuel reacts in the reaction chamber (1) by means of an entrained-flow gasification to form syngas, and
• the finely ground, carbon-containing fuel (3a) is introduced into the reaction chamber (1) at a first burner level (3) which extends over an upstream section of the full height of the reaction chamber (1) in the direction of the gas flow, and
• the syngas is obtained at a pressure of 0.1 to 8 MPa and is discharged from the reaction chamber (1) in an upward or downward direction;
• following discharge, the syngas obtained thereby is passed into a second reaction chamber which is configured as a collecting chamber (6) and in which the gas which is supplied is mixed with a cooler gaseous, vaporous or liquid substance (7a) for the purposes of cooling, and
• the dwell time of the syngas in the entrained flow after introducing the fuel and before entry into the downstream collecting chamber (6) for the purposes of cooling in the entrained flow is in the range 1 to 10 seconds; and
• a regrowing fuel (4a) is concentrically introduced into the reaction chamber (1) at a second or further burner level (4) or at a second or further burner lance level which also extends over a section of the full height of the reaction path and which is disposed downstream of the first burner level (3) in the direction of gas flow, in a manner such that a further entrainedflow gasification occurs by means of which the temperature of the outflowing gas is reduced and the difference in enthalpy is utilized for the additional gasification of regrowing raw materials,
**characterized in that**
• the syngas is passed into a quench chamber (11) via a discharge conduit (11a), and a regrowing fuel (12a) is concentrically introduced into the quench chamber (11) via burners (12) in the quench chamber (11) in a manner such that a further reaction occurs with the syngas, whereby the temperature of the syngas is further reduced, and the regrowing fuel (12a) is introduced into the quench chamber (11) via tangentially disposed feed devices (12) so that a swirling movement is given to the regrowing fuel (12a), whereby the dwell time for the regrowing fuel (12a) in the quench chamber (11) is increased.

2. The process for utilizing the enthalpy of a syngas by additional and post-gasification of regrowing fuels as claimed in claim 1, **characterized in that** the regrowing fuel (4a) is introduced into the reaction chamber (1) as a mixture with a steam-containing or oxygen-containing gas, water vapour, or with an oxygen-containing gas and water vapour.

3. The process for utilizing the enthalpy of a syngas by additional and post-gasification of regrowing fuels as claimed in claim 1 or claim 2, **characterized in that** the dwell time of the syngas after introducing the regrowing fuel (4a) and before entry into a collecting chamber (6) for cooling in the entrained flow downstream of the reactor is in the range 2 to 5 seconds.

4. The process for utilizing the enthalpy of a syngas by additional and post-gasification of regrowing fuels as claimed in one of claims 1 to 3, **characterized in that** the temperatures prevailing in the collecting chamber (6) are in the range 1400 - 1600 °C at the feed point for the regrowing fuel.

5. The process for utilizing the enthalpy of a syngas by additional and post-gasification of regrowing fuels as claimed in one of claims 1 to 4, **characterized in that** the carbon-containing fuel (3a) is introduced into the reaction chamber (1) via tangentially disposed feed devices (3) of the first burner level so that a swirling movement is given to the carbon-containing fuel, whereby the dwell time for the fuel in the reactor (1) is increased.

6. The process for utilizing the enthalpy of a syngas by additional and post-gasification of regrowing fuels as claimed in claim 1, **characterized in that** the regrowing fuel (12a) is introduced first into the quench chamber (11) in the direction of flow of the gas, and then the gaseous, vaporous or liquid substance (7a) is injected.

7. The process for utilizing the enthalpy of a syngas by additional and post-gasification of regrowing fuels as claimed in one of claims 1 to 6, **characterized in that** chopped, shredded, finely ground energy crops, wood in any form, straw, grass, cereals, biological residues, marine plants or cattle dung are used as the regrowing fuel.

8. The process for utilizing the enthalpy of a syngas by additional and post-gasification of regrowing fuels as claimed in one of claims 1 to 7, **characterized in that** the regrowing raw materials undergo a pre-treatment prior to gasification, wherein the pre-treatment steps include drying, carbonization, grinding or a combination of these steps.

9. The process for utilizing the enthalpy of a syngas by additional and post-gasification of regrowing fuels as claimed in one of claims 1 to 8, **characterized in that** regrowing fuels mixed with carbon-containing fuels are used as the fuel for the burners of the second burner level (4) or in the quench chamber (12).

10. The process for utilizing the enthalpy of a syngas by additional and post-gasification of regrowing fuels as claimed in claim 9, **characterized in that** regrowing raw materials mixed with carbon-containing fuels are used as the fuel for the first burner level (3) and the second burner level (4) in the reaction vessel and for the burners in the quench chamber (12), wherein the mixing ratios are different.

11. An apparatus for utilizing the enthalpy of a syngas by additional and post-gasification of regrowing fuels, wherein:
• the apparatus consists of a refractory reaction chamber (1) which is suitable for the gasification of solid, carbon-containing fuels by reaction with an oxygen-containing or water vapour-containing and oxygen-containing gas, and
• said refractory reaction chamber (1) contains one or more burners (3) which are concentrically disposed in one burner level (3) and by means of which a fuel can be introduced into the reaction chamber (1) in a horizontal direction or down from the head region (1a), and
• a second chamber adjoins this reaction chamber (1) leading downward or upward in a vertical direction, which is configured as a collecting chamber (6) and which is provided with feed devices (7) for gaseous, vaporous or liquid cooling media, and
• additional burners (4) are disposed between the first burner level (3) in the reaction chamber (1) and the collecting chamber (6), the additional burners also being concentrically disposed in one burner level and via which a regrowing fuel (4a) can be introduced into the reaction chamber (1) in a horizontal direction, and
• a discharge conduit (11a) is positioned between the reaction chamber (1) and the collecting chamber (6), by means of which a quench chamber (11) is formed, and
• the quench chamber (11) is provided with additional burners (12) which are also concentrically disposed in one burner level, by means of which a regrowing fuel (12a) can be introduced into the quench chamber (11) in a horizontal direction, and
• the burners (12) in the quench chamber (11) are orientated tangentially to the cylindrical burner wall so that a swirling movement is given to the entrained flow when carrying out the gasification reaction,
**characterized in that**
• the wall of the reaction chamber (1) is provided with a projection (15) at the outlet position for the syngas (14b) in such a manner that the feed burners (12) for regrowing raw material (12a) in the quench chamber (11) are installed in the flow shadow of the projection (15).

12. The apparatus for utilizing the enthalpy of a syngas by additional and post-gasification of regrowing fuels as claimed in claim 11, **characterized in that** the vertical height of the first burner level (3) takes up 10 percent of the full height of the reaction chamber in its entirety (1) and it contains 1 to 6 burners.

13. The apparatus for utilizing the enthalpy of a syngas by additional and post-gasification of regrowing fuels as claimed in claim 11 or claim 12, **characterized in that** the vertical height of the second burner level (4) takes up 10 percent of the full height of the reaction chamber in its entirety (1) and it contains 1 to 4 burners.

14. The apparatus for utilizing the enthalpy of a syngas by additional and post-gasification of regrowing fuels as claimed in one of claims 11 to 13, **characterized in that** the burners (3) of the first burner level are orientated tangentially to the cylindrical burner wall so that a swirling movement is given to the entrained flow when carrying out the gasification reaction.

15. The apparatus for utilizing the enthalpy of a syngas by additional and post-gasification of regrowing fuels as claimed in claim 14, **characterized in that** the burners of the second burner level (4) are also orientated tangentially to the cylindrical burner wall so that a further swirling movement is given to the entrained flow downstream of the first burner level (3) when carrying out the gasification reaction.

16. The apparatus for utilizing the enthalpy of a syngas by additional and post-gasification of regrowing fuels as claimed in one of claims 11 to 15, **characterized in that** a cooled slag deflector (4b) is located upstream of the burners of the second burner level (4) in the direction of slag flow, which protects the burners (4) from the red-hot liquid slag flowing down the wall.

17. The apparatus for utilizing the enthalpy of a syngas by additional and post-gasification of regrowing fuels as claimed in claim 16, **characterized in that** the cooled slag deflector (4b) is a steel apron installed upstream of the burners (4) in the direction of slag flow, which is provided with indirect cooling and which protects the burners (4) from red-hot liquid slag flowing down the wall.

18. The apparatus for utilizing the enthalpy of a syngas by additional and post-gasification of regrowing fuels as claimed in one of claims 11 to 17, **characterized in that** the burners (4) of the second burner level are disposed in a burner recess.

19. The apparatus for utilizing the enthalpy of a syngas by additional and post-gasification of regrowing fuels as claimed in one of claims 11 to 18, **characterized in that** the burners of the first level (3) are nozzles which inject the fuel (3a) as a mixture with an oxygen-containing gas.

20. The apparatus for utilizing the enthalpy of a syngas by additional and post-gasification of regrowing fuels as claimed in one of claims 11 to 19, **characterized in that** the burners introducing the regrowing fuel (12a) into the quench chamber (11) are disposed on a plurality of levels.

21. The apparatus for utilizing the enthalpy of a syngas by additional and post-gasification of regrowing fuels as claimed in one of claims 11 to 20, **characterized in that** the burners (4, 12) on the further levels are nozzles which inject the fuel (4a, 12a) as a mixture with an oxygen-containing gas.

22. The apparatus for utilizing the enthalpy of a syngas by additional and post-gasification of regrowing fuels as claimed in claims 11 to 21, **characterized in that** a water bath (8) which is suitable for collecting and quenching precipitated solids from the coal gasification reaction is positioned below the collecting chamber (6), which is provided with feed devices (7) for gaseous, vaporous or liquid substances.

23. The apparatus for utilizing the enthalpy of a syngas by additional and post-gasification of regrowing fuels as claimed in claims 11 to 22, **characterized in that** a lateral discharge outlet (10) for gaseous reaction products is provided below the collecting chamber (6), which is provided with feed devices for gaseous, vaporous or liquid cooling media (7).

## Revendications

1. Procédé pour l'utilisation de l'enthalpie d'un gaz de synthèse par gazéification supplémentaire et postérieure de combustibles renouvelables,
• le combustible finement moulu, carboné (3a) en mélange avec de l'oxygène ou un gaz enrichi en oxygène de l'extérieur en direction horizontale, orienté concentriquement ou vers le bas étant introduit depuis le haut dans une chambre de réaction réfractaire (1) de telle manière que le combustible dans une gazéification à flux entraîné réagit en gaz de synthèse dans la chambre de réaction (1), et
• le combustible finement moulu, carboné (3a) étant introduit à l'intérieur d'un premier plan de brûleurs (3) dans la chambre de réaction (1), qui s'étend sur une première partie de zone avant en direction de l'écoulement du gaz de toute la hauteur de la chambre de réaction (1), et
• le gaz de synthèse obtenu se trouvant sous une pression de 0,1 à 8 MPa et étant évacué de la chambre de réaction (1) dans une direction allant vers le haut ou vers le bas, et
• le gaz de synthèse ainsi obtenu étant dirigé après évacuation dans une deuxième chambre de réaction, qui est configurée comme chambre de réception (6) et dans laquelle le gaz amené est mélangé pour refroidissement à une matière gazeuse, vaporeuse ou liquide plus froide (7a), et
• le temps de séjour du gaz de synthèse se situant entre 1 et 10 secondes après introduction du combustible dans le flux entraîné et avant pénétration dans la chambre de réception intercalée à la suite (6) pour refroidissement dans le flux entraîné, et
• dans un deuxième ou un autre plan de brûleurs (4) ou un deuxième ou autre plan de lances brûleur, qui s'étend également sur une partie de zone de toute la hauteur de la distance de réaction et qui se trouve orientée en aval dans la direction du gaz derrière le premier plan de brûleurs (3), un combustible renouvelable (4a) étant introduit de manière concentrique dans la chambre de réaction (1) de telle manière qu'une autre gazéification à flux entraîné se produit au travers de laquelle la température du gaz s'échappant baisse et la différence d'enthalpie est utilisée pour la gazéification supplémentaire des matières premières renouvelables,
**caractérisé en ce que**
• le gaz de synthèse est guidé par une tubulure de sortie (11a) dans une chambre de refroidissement (11) et un combustible renouvelable (12a) est introduit de manière concentrique dans la chambre de refroidissement (11) par des brûleurs (12) dans la chambre de refroidissement (11) de telle manière qu'une autre réaction a lieu avec le gaz de synthèse, ce par quoi la température du gaz de synthèse est encore baissée et le combustible renouvelable (12a) est introduit dans la chambre de refroidissement (11) par des dispositifs d'introduction (12) disposés de manière tangentielle, de telle manière que le combustible renouvelable (12a) reçoit un tourbillon au moyen duquel la durée de séjour du combustible renouvelable (12a) est augmentée dans la chambre de refroidissement (11) .

2. Procédé pour l'utilisation de l'enthalpie d'un gaz de synthèse par gazéification supplémentaire et postérieure de combustibles renouvelables selon la revendication 1, **caractérisé en ce que** le combustible renouvelable (4a) est introduit dans la chambre de réaction (1) en mélange avec un gaz vaporeux ou oxygéné, de la vapeur d'eau ou un gaz oxygéné et de la vapeur d'eau.

3. Procédé pour l'utilisation de l'enthalpie d'un gaz de synthèse par gazéification supplémentaire et postérieure de combustibles renouvelables selon l'une quelconque des revendications 1 à 2, **caractérisé en ce que** la durée de séjour du gaz de synthèse est de 2 à 5 secondes après l'introduction du combustible renouvelable (4a) et avant pénétration dans une chambre de réception (6) intercalée après le réacteur pour refroidissement dans le flux entraîné.

4. Procédé pour l'utilisation de l'enthalpie d'un gaz de synthèse par gazéification supplémentaire et postérieure de combustibles renouvelables selon l'une quelconque des revendications 1 à 3, **caractérisé en ce que** dans la chambre de réception (6) règnent des températures de 1400 - 1600 °C à l'endroit d'introduction pour le combustible renouvelable.

5. Procédé pour l'utilisation de l'enthalpie d'un gaz de synthèse par gazéification supplémentaire et postérieure de combustibles renouvelables selon l'une quelconque des revendications 1 à 4, **caractérisé en ce que** le combustible carboné (3a) est introduit dans la chambre de réaction (1) par des dispositifs d'introduction (3) disposés de manière tangentielle de telle sorte que le combustible carboné reçoit un tourbillon, ce par quoi la durée de séjour du combustible dans le réacteur (1) est augmentée.

6. Procédé pour l'utilisation de l'enthalpie d'un gaz de synthèse par gazéification supplémentaire et postérieure de combustibles renouvelables selon la revendication 1, **caractérisé en ce que** dans la chambre de refroidissement (11) il se produit en direction de l'écoulement du gaz d'abord l'introduction du combustible renouvelable (12a) et ensuite l'injection de la substance gazeuse, vaporeuse ou liquide (7a).

7. Procédé pour l'utilisation de l'enthalpie d'un gaz de synthèse par gazéification supplémentaire et postérieure de combustibles renouvelables selon l'une quelconque des revendications 1 à 6, **caractérisé en ce qu'**on utilise des plantes énergétiques hachées, broyées, finement moulues, du bois sous une forme quelconque, de la paille, des herbes, des plantes céréalières, des substances résiduelles biologiques sont utilisés, des plantes marines ou des déchets animaux comme combustible renouvelable.

8. Procédé pour l'utilisation de l'enthalpie d'un gaz de synthèse par gazéification supplémentaire et postérieure de combustibles renouvelables selon l'une quelconque des revendications 1 à 7, **caractérisé en ce que** les matières premières renouvelables sont soumises avant la gazéification à un traitement préalable, les étapes de traitement préalable comprenant un séchage, une carbonisation, une mouture ou une combinaison de ces étapes.

9. Procédé pour l'utilisation de l'enthalpie d'un gaz de synthèse par gazéification supplémentaire et postérieure de combustibles renouvelables selon l'une quelconque des revendications 1 à 8, **caractérisé en ce qu'**on utilise des combustibles renouvelables en mélange avec des combustibles carbonés en tant que combustible pour les brûleurs du deuxième plan de brûleurs (4) ou dans la chambre de refroidissement (12).

10. Procédé pour l'utilisation de l'enthalpie d'un gaz de synthèse par gazéification supplémentaire et postérieure de combustibles renouvelables selon la revendication 9, **caractérisé en ce qu'**on utilise des matières premières renouvelables en mélange avec des combustibles carbonés en tant que combustible pour le premier (3) et le deuxième plan de brûleurs (4) dans la cuve de réaction et pour les brûleurs dans la chambre de refroidissement (12), les rapports de mélange étant différents.

11. Dispositif pour l'utilisation de l'enthalpie d'un gaz de synthèse par gazéification supplémentaire et postérieure de combustibles renouvelables,
• celui-ci étant composé d'une chambre de réaction réfractaire (1), qui convient à la gazéification de combustibles solides, carbonés par transformation avec un gaz oxygéné ou vaporeux et oxygéné, et
• cette chambre de réaction réfractaire (1) contenant un ou plusieurs brûleurs (3), qui sont disposés de manière concentrique dans un plan de brûleurs (3) et sur lesquels un combustible peut être introduit en direction horizontale dans la chambre de réaction (1) ou en partant de la zone du couvercle (1a), et
• une deuxième chambre se raccordant dans le sens vertical vers le bas ou vers le haut en allant vers cette chambre de réaction (1), laquelle est configurée comme chambre de réception (6) et qui est équipée de dispositifs d'alimentation (7) pour des milieux réfrigérants gazeux, vaporeux ou liquides, et
• d'autres brûleurs (4) se trouvant entre le premier plan de brûleurs (3) dans la chambre de réaction (1) et la chambre de réception (6), qui sont également disposés de façon concentrique dans un plan de brûleurs et par le biais desquels un combustible renouvelable (4a) peut être introduit en direction horizontale dans la chambre de réaction (1), et
• une tubulure d'évacuation (11a) se trouvant entre la chambre de réaction (1) et la chambre de réception (6) par laquelle est formée une chambre de refroidissement (11), et
• d'autres brûleurs (12) se trouvant dans la chambre de refroidissement (11), qui sont disposés également de façon concentrique dans un plan de brûleurs par lequel un combustible renouvelable (12a) peut être introduit en direction horizontale dans la chambre de refroidissement (11), et
• les brûleurs (12) dans la chambre de refroidissement (11) étant orientés tangentiellement à la paroi de brûleur cylindrique de telle manière que l'écoulement du flux entraîné reçoit un tourbillon lors de l'exécution de la réaction de gazéification,
**caractérisé en ce que**
• la paroi de la chambre de réaction (1) est dotée à l'endroit de sortie pour le gaz de synthèse (14b) d'un élément en saillie (15) de telle manière que les brûleurs d'alimentation (12) pour la matière première renouvelable (12a) se trouvent dans la chambre de refroidissement (11) l'ombre du flux de l'élément en saillie (15).

12. Procédé pour l'utilisation de l'enthalpie d'un gaz de synthèse par gazéification supplémentaire et postérieure de combustibles renouvelables selon la revendication 11, **caractérisé en ce que** le premier plan de brûleurs (3) possède une hauteur verticale de 10 pour cent de la hauteur totale de toute la chambre de réaction (1) et contient 1 à 6 brûleurs.

13. Procédé pour l'utilisation de l'enthalpie d'un gaz de synthèse par gazéification supplémentaire et postérieure de combustibles renouvelables selon l'une quelconque des revendications 11 ou 12, **caractérisé en ce que** le deuxième plan de brûleurs (4) possède une hauteur verticale de 10 pour cent de la hauteur totale de toute la chambre de réaction (1) et contient 1 à 4 brûleurs.

14. Procédé pour l'utilisation de l'enthalpie d'un gaz de synthèse par gazéification supplémentaire et postérieure de combustibles renouvelables selon l'une quelconque des revendications 11 à 13, **caractérisé en ce que** les brûleurs (3) du premier plan de brûleurs sont orientés tangentiellement à la paroi de brûleur cylindrique de telle manière que l'écoulement du flux entraîné reçoit un tourbillon lors de l'exécution de la réaction de gazéification.

15. Procédé pour l'utilisation de l'enthalpie d'un gaz de synthèse par gazéification supplémentaire et postérieure de combustibles renouvelables selon la revendication 14, **caractérisé en ce que** les brûleurs du deuxième plan de brûleurs (4) sont également orientés tangentiellement à la paroi de brûleur cylindrique de telle manière que l'écoulement du flux entraîné reçoit un autre tourbillon derrière le premier plan de brûleurs (3) lors de l'exécution de la réaction de gazéification.

16. Procédé pour l'utilisation de l'enthalpie d'un gaz de synthèse par gazéification supplémentaire et postérieure de combustibles renouvelables selon l'une quelconque des revendications 11 à 15, **caractérisé en ce qu'**un séparateur de scories refroidi (4b) se trouve en direction de l'écoulement des scories au-dessus des brûleurs du deuxième plan de brûleurs (4), qui protège les brûleurs (4) des scories incandescentes s'écoulant sur la paroi.

17. Procédé pour l'utilisation de l'enthalpie d'un gaz de synthèse par gazéification supplémentaire et postérieure de combustibles renouvelables selon la revendication 16, **caractérisé en ce que** concernant le séparateur de scories refroidi (4b), il s'agit d'un tablier d'acier, qui se trouve en direction de l'écoulement des scories au-dessus des brûleurs (4), qui est doté d'un refroidissement indirect et protège les brûleurs (4) des scories incandescentes s'écoulant sur la paroi.

18. Procédé pour l'utilisation de l'enthalpie d'un gaz de synthèse par gazéification supplémentaire et postérieure de combustibles renouvelables selon l'une quelconque des revendications 11 à 17, **caractérisé en ce que** les brûleurs (4) du deuxième plan de brûleurs sont disposés dans une niche de brûleurs.

19. Procédé pour l'utilisation de l'enthalpie d'un gaz de synthèse par gazéification supplémentaire et postérieure de combustibles renouvelables selon l'une quelconque des revendications 11 à 18, **caractérisé en ce que** concernant les brûleurs du premier plan (3), il s'agit de buses, qui injectent le combustible (3a) en mélange avec un gaz oxygéné.

20. Procédé pour l'utilisation de l'enthalpie d'un gaz de synthèse par gazéification supplémentaire et postérieure de combustibles renouvelables selon l'une quelconque des revendications 11 à 19, **caractérisé en ce que** les brûleurs pour l'introduction du combustible renouvelable (12a) dans la chambre de refroidissement (11) sont disposés en plusieurs plans.

21. Procédé pour l'utilisation de l'enthalpie d'un gaz de synthèse par gazéification supplémentaire et postérieure de combustibles renouvelables selon l'une quelconque des revendications 11 à 20, **caractérisé en ce que** concernant les brûleurs (4, 12) de l'autre plan, il s'agit de buses, qui injectent le combustible (4a, 12a) en mélange avec un gaz oxygéné.

22. Procédé pour l'utilisation de l'enthalpie d'un gaz de synthèse par gazéification supplémentaire et postérieure de combustibles renouvelables selon les revendications 11 à 21, **caractérisé en ce qu'**un bain d'eau (8) se trouve en-dessous de la chambre de réception (6), qui est dotée de dispositifs d'alimentation (7) pour des matières gazeuses, vaporeuses ou liquides, lequel bain est adapté pour recevoir et refroidir des matières résiduelles solides de la réaction de gazéification du charbon.

23. Procédé pour l'utilisation de l'enthalpie d'un gaz de synthèse par gazéification supplémentaire et postérieure de combustibles renouvelables selon les revendications 11 à 22, **caractérisé en ce que** sous la chambre de réception (6), dotée de dispositifs d'alimentation pour milieux réfrigérants (7) gazeux, vaporeux ou liquides, il y a une évacuation (10) à orientation latérale pour des produits de réaction gazeux.
